# EUROPEAN PATENT APPLICATION

(11) **EP 1 942 326 A1**
(43) Date of publication of application: **09.07.2008**
(21) Application number: 07000141.7
(22) Date of filing: 04.01.2007
(51) Int. Cl.: G01L 23/16, G01L 11/02, G01L 19/00

(54) **Pressure measurement device for a gas turbine**

(71) Applicant: SIEMENS AKTIENGESELLSCHAFT, 80333 München (DE)
(72) Inventor: Andersson, Nils-Erik, 61238 Finspong (SE)

(57) **Abstract**

The invention relates to a pressure measurement device (20) for pressure measurement in a combustion medium inside a gas turbine, which gas turbine contains a burner (10) for supplying the combustion medium in an uncombusted state to a combustion chamber of the gas turbine and which pressure measurement device (20) comprises a measuring point (28) defining the location of the pressure measurement, characterized in that the pressure measurement device (20) is configured to be arranged such that said measuring point (28) is located inside the burner (10) of the gas turbine.

## Description

### Field of the invention

This invention relates to a pressure measurement device for pressure measurement in a combustion medium inside a gas turbine, which gas turbine contains a burner for supplying the combustion medium in an uncombusted state to a combustion chamber of the gas turbine and which pressure measurement device comprises a measuring point defining the location of the pressure measurement. Further, this invention relates to a burner for a gas turbine. In addition, the invention relates to a gas turbine comprising the above-mentioned burner. The invention also relates to a method for pressure measurement in a combustion medium inside a gas turbine containing a burner for supplying the combustion medium in an uncombusted state to a combustion chamber of the gas turbine.

### Background of the invention

A gas turbine in general comprises one or several burners typically leading into an annular combustion chamber. The burners are each supplied by fuel in liquid or gaseous form, which is mixed with an oxygen containing gas, like air, in a mixing section of the burner, resulting in a combustion medium. Subsequently, the combustion medium is supplied to the combustion chamber for combustion. In order to supervise the combustion process at least three pressure measurement devices in the form of pressure probes are placed inside the combustion chamber. The pressure probes are connected via a piping system to an outer wall of the typically annular combustion chamber. The measurement points of the pressure probes are typically placed asymmetrically along the inside of the circumference of the combustion chamber. The pressure probes have the function of measuring any pressure pulsations of the combustion medium contained inside the combustion chamber.

However, the results of the measurements obtained by the pressure probes may cause difficulties in interpreting. Further, the piping system could cause failures, which leads to downtimes of the gas turbine for repair purposes.

### Summary of the invention

It is an object of the present invention to provide a gas turbine comprising a pressure measurement device and a method for pressure measurement of the afore mentioned kind, which allows for a more correct and a more reliable information of possible pressure pulsations in the combustion chamber of the gas turbine.

The above object is solved according to the present invention by providing a pressure measurement device of the above mentioned kind, which is configured to be arranged such that the measuring point is located inside the burner of the gas turbine. Further, the above object is solved according to the present invention by providing a burner for a gas turbine, which burner is provided with comprising a pressure measurement device of this type. The pressure measurement device is an additional element attributed to the burner and is at least partially arranged inside the burner. In addition, the object is solved according to the invention by providing a gas turbine comprising such a burner. The object is also solved according to the invention by providing a method of the above mentioned kind, wherein the pressure is measured inside the burner of the gas turbine.

By arranging the pressure measurement device with respect to the burner, such that the measuring point is located inside the burner of the gas turbine a more reliable detection of pulsations in the medium contained in the combustion chamber can be obtained. The interior of the burner has a different configuration as compared to the inside of the combustion chamber. Therefore, measurement errors e.g. related to the measurement location being in a pulsation node of the pressure pulsations, which can be the case when placing the pressure measurement device inside the combustion chamber can be successfully avoided.

Further, as the flame of the combustion process is typically limited to the combustion chamber, the pressure pulsations reflecting into the burner are reduced in scale as compared to the pressure fluctuations inside the combustion chamber, which allows the pressure measurement device to be operated in a range of high sensitivity.

The volume of the combustion medium contained inside the burner is typically smaller than the volume of the combustion medium contained inside the combustion chamber. Therefore, possible pulsations are not as strong inside the burner as they are inside the combustion chamber. Further, destructive influences of the pressure pulsations on the measurement system, leading to a break-down of the pressure measurement system, can essentially be avoided according to the inventive solution.

Further, as the pressure can be measured individually inside each of the burners supplying the combustion medium to the combustion chamber the influence of single burners on the pressure pulsations can easily be monitored.

Further, the pressure measurement device according to the invention can easily be exchanged or removed for functional testing by removing the pressure probe part or the whole burner from the gas turbine. This allows for very easy maintenance operations, as no work has to be done inside the combustion chamber for the above purposes. Further, no specific connections inside the combustion chamber are required for the pressure measurement device.

Additionally, upgrades of already installed gas turbines with the pressure measurement device according to the invention can easily be conducted by merely adding the inventive pressure measurement device to each of the existing burners. Also, existing burners could be exchanged with burners having the inventive pressure measurement device.

Further, the pressure measurement device according to the invention can be used for learning on acoustic modes in a combustion chamber, which develop in the case, in which a large number of burners, e.g. thirty burners, are attached to a single combustion chamber. The signals measured at each of the pressure measurement devices of the associated burners can be used to understand high frequency modes developing in combustion chambers connected to such a large number of burners.

Advantageously, the burner comprises a mixing section for generating the combustion medium by mixing oxygen containing gas and fuel, like air and fuel and the pressure measurement device is configured to be arranged such that the measuring point is located inside the mixing section of the burner. This way, the pressure inside the mixing section of the burner can be measured by the pressure measurement device. Pressure fluctuations in the combustion chamber typically cause predictable pressure variations in the mixing section of the burner. Therefore, measuring the pressure inside the mixing section allows for a very precise and reliable supervision of pressure pulsations in the associated combustion chamber.

In a particularly advantageous embodiment the pressure measurement device has an elongated shape. Preferably, the pressure measurement device is at least partially of cylindrical shape and/or is formed in the shape of a rod. Due to its elongated shape the pressure measurement device can easily be mounted to extend at least partially inside the burner with the measuring point being located inside the mixing section without disturbing the given fluid dynamics inside the burner. Typically, the burner has a tube-like shape having a longitudinal axis. The pressure measurement device is preferably configured to be arranged with its elongated shape extending parallel to the longitudinal axis of the burner. Preferably, the pressure measurement device can at least partially be arranged in the center of the tube-shaped burner. In this case, the fluid dynamics inside the burner, which has a preferred flow direction parallel to the longitudinal axis is not affected by the presence of the pressure measurement device.

It is further preferable, if the pressure measurement device comprises an attachment element for attaching the pressure measurement device to the burner and an extension element having an elongated shape, wherein the measuring point is located at a distal end of the extension element with respect to the attachment element. This way, the pressure measurement device can be attached to an end wall of a tube-shaped burner using the attachment element. Due to the elongated shape of the extension element, the pressure measurement device then reaches with its distal end into the mixing section. This allows for a precise measurement of pressure fluctuations in the combustion chamber without disturbing the fluid dynamics inside the burner.

It is further advantageous, if the pressure measurement device has the shape and/or the function of a fuel injection center lance for injecting fuel into the burner. Such fuel injection lances are known in the state of the art and are particularly used for injecting liquid fuel into the mixing section of the burner. Also for burners, which do not have such a fuel injection lance, like burners using a gaseous fuel, the inclusion of such a pressure measurement device having the shape of a fuel injection lance, fits well into the design of the overall burner and can be retrofitted easily in existing burner designs. Also, the design of such a fuel injection lance can be optimised with respect to the fluid dynamics inside the burner. In case of a burner already having a fuel injection lance, like burners using liquid fuel, only the existing fuel injection lance has to be replaced by a fuel injection lance including the pressure measurement function according to the invention.

It is further preferable, if the pressure measurement device comprises a pressure sensor for converting physical pressure into an information signal, like an electrical signal. The pressure sensor can also be referred to as transducer and is in particular configured to allow dynamic pressure measurement. Therewith, the pressure at the measurement point can be measured over time. The information on pressure variations over time allows a very precise analysis of the nature of pressure pulsations existing in the combustion chamber. The pressure sensor can be configured to use silicon, quartz, and/or dielectric thin films as sensor materials. The pressure sensor can also comprise an optical pressure sensor.

In a further preferred embodiment, the pressure measurement device contains a fluid conductive probing channel, which connects the measuring point to the pressure sensor. Therefore, the pressure sensor can be arranged in the pressure measurement device at a location different from the measuring point. In particular the pressure sensor can be arranged outside of the burner. The pressure sensor is preferably arranged at a distal end portion of the burner with respect to the combustion chamber. In this case, the pressure sensor is mounted at a secure location with respect to possible destructive influences of the pressure variations emanating from the combustion chamber. By arranging the pressure sensor far away from the measuring point, the pressure sensor can be located at a considerable distance from the heat source in the combustion chamber. Therefore, the pressure sensor can be kept at a reasonably low operating temperature. Preferably, the pressure sensor is located far enough from the combustion chamber to keep its operating temperature below 500 °C.

It is further preferable, if the pressure sensor is arranged at the measuring point. In this arrangement, a particularly accurate pressure measurement can be obtained.

It is further preferable, if the pressure sensor comprises an optical pressure sensor. In particular, this optical pressure sensor can be a fiber-optic pressure sensor, which advantageously contains a fiber-optic bragg-grating attached to a flexible membrane as a pressure detection device. Such an optical pressure sensor allows for very accurate pressure measurement. An optical pressure sensor can be operated at a high ambient temperature, even at an ambient temperature of more than 500 °C. It can therefore be located at the measuring point close to the combustion chamber, which leads to a very precise pressure measurement.

In an advantageous embodiment of the burner according to the invention, the burner has a tube-like shape having a longitudinal axis and the pressure measurement device is arranged with its elongated shape extending parallel to the longitudinal axis, in particular being centered inside the burner. Therefore, the pressure measurement device basically extends along the longitudinal axis, i.e. is centered inside the tube-shaped burner with respect to its radial extension.

The features specified above with respect to the inventive pressure measurement device can be transferred correspondingly to the inventive method. Advantageous embodiments of the inventive method resulting therefrom shall be covered by the disclosure of this invention.

### Brief description of the drawings

A detailed description of the present invention is provided herein below with reference to the following diagrammatic drawings, in which:
Figure 1 is a front view of an embodiment of a burner of a gas turbine being provided with a first embodiment of a pressure measurement device according to the invention,
Figure 2 is a sectional view along II-II according to Figure 1,
Figure 3 is a sectional view along III-III according to Figure 1,
Figure 4 is a sectional view of a tip portion of a second embodiment of a pressure measurement device according to the invention arrangeable in the area designated by IV of the burner shown in Figure 2, and
Figure 5 is a detailed sectional view of a third embodiment of a pressure measurement device according to the invention.

### Description of the preferred embodiments

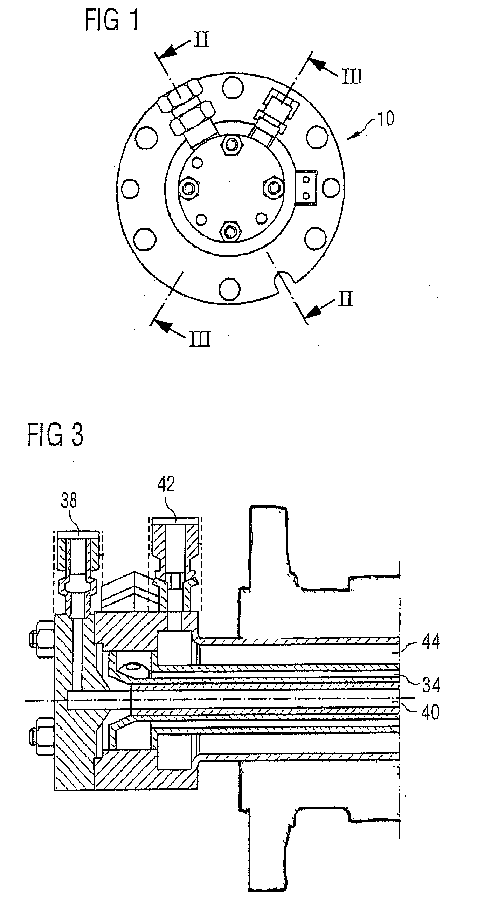

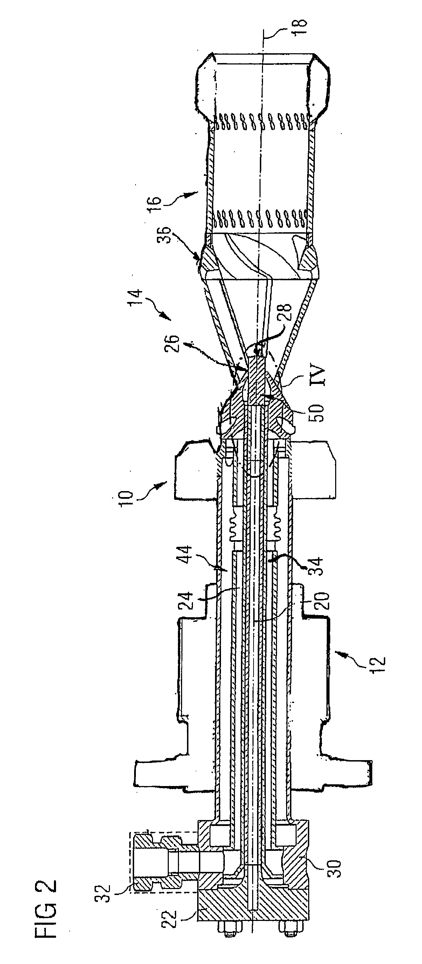

Figures 1 and 2 depict an embodiment of a burner 10 for a gas turbine. Typically, several burners 10 of this type are connected to an annular combustion chamber of the gas turbine for supplying a combustion medium in the form of a fuel/air mixture required for operating the combustion process in a combustion chamber of the gas turbine. Therefore, these burners are typically arranged around the combustion chamber.

As shown in Figure 2, the burner 10 extends along a longitudinal axis 18 and comprises a fuel supply section 12, a mixing section 14 and a stabilising section 16. In the fuel supply section 12, fuel in liquid or gaseous form is supplied to the mixing section 14. In the mixing section 14 air is introduced from the outside through air holes 36 and mixed with the fuel for forming the combustion medium in form of a fuel/air mixture. The mixing section 14 has the shape of a cone expanding in the flow direction of the supplied fuel, oriented from left to right according Fig. 2. The mixing section 14 leads into the stabilising section 16, which is of cylindrical shape and is designed to stabilise the flow dynamics of the combustion fuel. The stabilising section 16 connects into the combustion chamber, which follows at the right side end of the stabilising section 14 according to Fig. 2, but it not shown in the Figure. In the combustion chamber the combustion fuel is combusted for powering the gas turbine.

The fuel supply section 12 is provided with a first embodiment of a pressure measurement device 20 in the shape of a center fuel lance. The pressure measurement device 20 is arranged in the center of the fuel supply section 12 with respect to its extension radial to the longitudinal axis 18. In the embodiment shown in Figures 2 and 3 the pressure measurement device 20 is configured for also performing the function of a fuel lance. The pressure measurement device 20 comprises an attachment element 22 for attaching the pressure measurement device 20 to a housing 30 of the fuel supply section 12. The attachment element 22 is followed by an extension element 24 of elongate shape extending along the longitudinal axis 18 of the burner 10. The extension element 24 extends through the fuel supply section 12 and into the mixing section 14. The tip portion or distal end 26 of the extension element 24 with respect to the attachment element 22 is positioned inside the mixing section 14.

At the distal end 26 of the extension element 24, a measuring point 28 is located, at which the pressure of the combustion medium inside the mixing section 14 can be measured. This is done using a pressure sensor 50, which either can be located at the measuring point 28 or can be connected with the measuring point 28 via a fluid conductive probing channel. In this case, the pressure sensor 50, which is not shown in detail in Figure 2, can also be located outside of the pressure measurement device.

In Figure 2, a first fuel inlet 32 is shown for supplying fuel in form of gas into the burner 10. The fuel enters the burner 10 through the fuel inlet 32 and is subsequently guided in an inner gas tube 34 surrounding the extension element 24 of the pressure measurement device 20. Figure 3 shows a second fluid inlet 42 for fuel in the form of gas, which is connected to an outer gas tube 44 surrounding the inner gas tube 34. Figure 3 also shows a third fuel inlet 38, which is designed for the supply of fuel in fluid form. The fuel inlet 38 is connected to a channel 40 for ducting liquid fuel inside the pressure measurement device 20, which acts, as mentioned before in this embodiment, as a center fuel lance for supplying the liquid fuel into the mixing section 14.

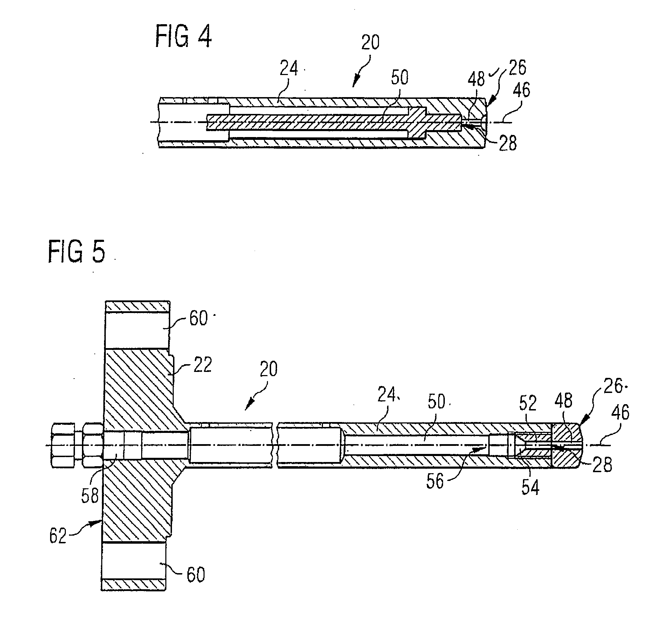

Figure 4 shows a schematic view of an end portion of an extension element 24 of a second embodiment of the pressure measurement device 20. This end portion of the extension element 24 corresponds to the portion of the pressure measurement device 20 contained in the area IV of Figure 2. The end portion contains a pressure sensor 50 in the form of a transducer, which is exposed to the combustion medium via a small bore 48 in the distal end 26 of the device 20.

Figure 5 shows a third embodiment of the pressure measurement device 20 according to the invention. The device 20 contains an attachment element 22 including attachment bores 60 for attaching the device 20 to a housing 30 of the burner 10. Corresponding to the device 20 according to Fig. 2 the attachment element 22 is followed by an extension element 22 having a distal end 26 or a tip portion. Near the distal end 26, a pressure sensor 50 is contained in the extension element 24. The pressure sensor 50 in the embodiment according to Fig. 5 is configured as an optical sensor, which contains an optical fiber 52, an optical lens 54 and a bragg-grating 56.

In a further embodiment of the pressure measurement device 20, not shown in the drawings, the pressure sensor 50 can also be arranged on a feed side 62 of the device 20. In this case, a fluid conductive probing channel extends inside the extension element 24 starting from the measuring point 28 at the distal end 26 of the extension element 24. With this probing channel the pressure variations at the measuring point 28 are guided to the pressure sensor arranged outside of the device 20.

## Claims

1. Pressure measurement device (20) for pressure measurement in a combustion medium inside a gas turbine, which gas turbine contains a burner (10) for supplying said combustion medium in an uncombusted state to a combustion chamber of said gas turbine and which pressure measurement device (20) comprises a measuring point defining the location of said pressure measurement,
**characterized in that** said pressure measurement device (20) is configured to be arranged such that said measuring point (28)is located inside said burner (10) of said gas turbine.

2. Pressure measurement device according to claim 1,
**characterized in that** said burner (10) comprises a mixing section (14) for generating said combustion medium by mixing oxygen containing gas and fuel, and **in that** said pressure measurement device (20) is configured to be arranged such that said measuring point (28) is located inside said mixing section (14) of said burner (10).

3. Pressure measurement device according to claim 1 or 2,
**characterized in that** said pressure measurement device (20) has an elongated shape.

4. Pressure measurement device according to any one of the preceding claims,
**characterized in that** said pressure measurement device (20) comprises an attachment element (22) for attaching said pressure measurement device (20) to said burner (10) and an extension element (24) having an elongated shape, wherein said measuring point (28) is located at a distal end (26) of said extension element (24) with respect to said attachment element (22).

5. Pressure measurement device according to any one of the preceding claims,
**characterized in that** said pressure measurement device (20) has the shape and/or the function of a fuel injection center lance for injecting fuel into said burner (10).

6. Pressure measurement device according to any one of the preceding claims,
**characterized in that** said pressure measurement device (20) comprises a pressure sensor (50) for converting physical pressure into an information signal, which is in particular configured to conduct dynamic pressure measurement.

7. Pressure measurement device according to claim 6,
**characterized by** a fluid conductive probing channel, which connects said measuring point (28) to said pressure sensor (50) .

8. Pressure measurement device according to claim 6,
**characterized in that** said pressure sensor (50) is arranged at said measuring point (28).

9. Pressure measurement device according to any one of claims 6 to 8, **characterized in that** said pressure sensor (50) comprises an optical pressure sensor.

10. Burner (10) for a gas turbine, which burner (10) is provided with a pressure measurement device (20) according to any one of the preceding claims.

11. Burner for a gas turbine according to claim 10,
**characterized in that** said burner has a tube-like shape having a longitudinal axis (18) and said pressure measurement device (20) is arranged with its elongated shape extending parallel to said longitudinal axis (18), in particular being centered inside said burner (10).

12. Gas turbine comprising a burner (10) according to claim 10 or 11.

13. Method for pressure measurement in a combustion medium inside a gas turbine containing a burner (10) for supplying said combustion medium in an uncombusted state to a combustion chamber of said gas turbine,
**characterized in that** said pressure is measured inside said burner (10) of said gas turbine.
